# EUROPEAN PATENT SPECIFICATION

(11) **EP 1 565 716 B1**
(45) Date of publication and mention of the grant of the patent: **14.05.2008**
(21) Application number: 03780307.9
(22) Date of filing: 25.11.2003
(51) Int. Cl.: G01M 1/34

(54) **OFF-CENTRE MACHINING APPARATUS AND METHOD**
GERÄT UND VERFAHREN ZUR EXZENTRISCHEN VERARBEITUNG
APPAREIL D'USINAGE EXCENTRIQUE ET PROCEDE ASSOCIE

(30) Priority: 26.11.2002 GB 0227520
(43) Date of publication of application: 24.08.2005
(73) Proprietor: Bombardier Transportation GmbH, 10785 Berlin (DE)
(72) Inventor: GARBUTT, Bruce, Crewe, Cheshire, CW2 7PL (GB); PARR, Kevin, Crewe CW2 8AQ (GB); HOWITT, Mark, Alsager, Stoke-on-Trent ST7 2LG (GB); KAYE, Michael, Cudworth, Bransley S72 8FB (GB); LEES, John, Sheffield S2 3AT (GB)
(74) Representative: Broydé, Marc
(86) International application number: PCT/GB2003/005115
(87) International publication number: WO 2004/048918

(56) References cited:
- US-A- 4 276 793
- US-A- 5 992 581

## Description

The invention relates generally to off-centre machining and, more particularly, to an apparatus and method for off-centre machining of wheels and other rotating equipment, especially with the objective of balancing them.

Wheels used for trains are typically constructed from steel and designed to support heavy loads and withstand years of service. Due to variability in the manufacturing process for such wheels, the distribution of weight in a wheel is often uneven creating an imbalance. When the wheel is rotated, this imbalance in the wheel may cause vibration in the train and premature wear on the wheel, axles, running gear and other train components. This problem becomes more severe at higher speeds. Similar problems occur with gear wheels, shafts, turbocharger impellers and other such rotating equipment.

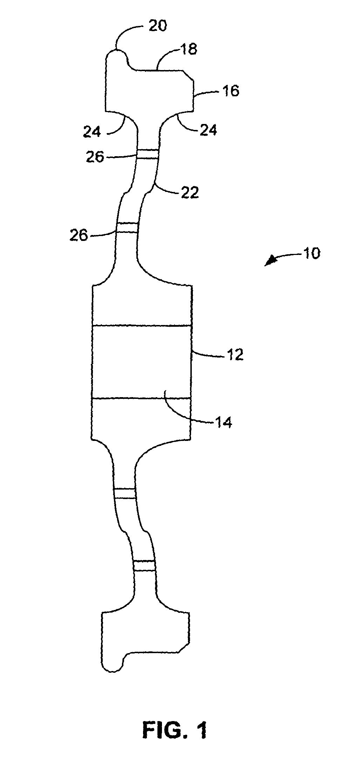

Fig. 1 shows a cross sectional view of a typical train wheel 10, showing the boss 12 with bore 14 for mounting the wheel on an axle. The rim 16 includes tread 18 and flange 20. A relatively thin web or plate 22 connects the boss 12 and rim 16. Fillet 24 forms a (usually) sloping face at the join between the rim 16 and the thinner web 22.

Several different techniques have been used for balancing train wheels. Holes 26 may be drilled in the web 22, the rim 16 or the fillet 24 of the wheel to reduce the weight of the wheel in one region. This is a relatively simple procedure but has the disadvantage that the hole may impair the structural integrity of the wheel. Any imperfections or sharp corners in or around the hole can increase the stresses within the metal and so become points from which cracks may grow. Alternatively, balance weights may be screwed or bolted onto the wheel to increase the weight of the wheel in one region. This has all the disadvantages of drilling holes, since the bolt or screw needs a hole. Although the hole tends to be smaller, the stress and crack initiation problems can be more severe because of the shape of the screw or bolt thread and the process of creating the thread can aggravate these problems.

Owing to defects being found in wheels balanced using drilled holes or added balance weights, the United Kingdom government has adopted a standard that requires all balancing to be performed by off-centre machining. This standard is BS5892-3:1992, section 5.8. Although the United Kingdom standard is cited, the same issues are relevant in all countries that operate trains. Off-centre machining is performed while the wheel is mounted on a wheelset and the wheelset is mounted in a wheelset lathe with the wheelset positioned off-centre to the axis of the lathe. This method has the disadvantage that the wheelset needs to be mounted in a wheelset lathe. The wheelset must then be removed from the lathe and remounted on a balancing machine in order to check the balance, or else the wheelset lathe must have the capability of balancing the wheelset.

However, many locations at which wheels are changed do not have wheelset lathes capable of performing this job or do not have the capacity to perform these additional balancing and machining operations on existing wheelset lathes. Furthermore, this procedure is slow, due to the need to move the heavy wheelset, due to the difficult non-standard set-up and operation of the lathe, and due to the slow off-centre machining procedure on a wheelset lathe. A wheelset lathe is an expensive piece of equipment and the above procedure requires its use for a large amount of time, thus consuming too much wheelset lathe capacity. The above procedure is also complex leading to inaccuracies and re-work. For all these reasons off-centre machining is seldom performed and wheels are balanced using the traditional methods involving drilling holes in the wheels.

A method for final balancing a brake drum is disclosed in US 5 992 581. The method comprises positioning-and clamping in place the initially machined brake drum on a static balancer for determining a mass and a location on the work piece of an imbalance of the brake drum; applying a mark on the brake drum before transferring the brake drum to a milling machine where the brake drum is positioned and clamped in place with the reference mark on the drum aligned with a corresponding reference mark provided on the milling machine; determining with a computer a radius, a length and a depth for a curved cutting path for removal of the material; and moving a cutting tool along the cutting path to remove the material from the drum to correct imbalance.

The present invention seeks to provide an apparatus and method to perform off-centre machining without the use of a wheelset lathe and which results in quick and accurate machining operation.

In accordance with the invention, a method for off-centre machining of a work piece comprising a wheel, an assembled wheel set, a gear wheel, a turbocharger impeller, a fly wheel, or other rotatable component or assembly, comprises the steps of determining a mass and a location on the work piece of material for removal from the work piece; determining a radius, a length, and a depth for a curved cutting path for removal of the material; and moving a cutting tool along the cutting path to remove the material from the work piece, wherein the step of moving the cutting tool along the cutting path the cutting tool is guided at least in part by a contour of the work piece. This determination may be performed manually, automatically or semi-automatically, semi-automatically being using both equipment and human intervention.

The method may be performed wherein the work piece is not rotated during the step of moving the cutting tool along the cutting path. The step of moving the cutting tool along the cutting path, may comprise moving the cutting tool back and forth along the cutting path to remove material from the work piece.

Another aspect of the invention comprises an apparatus for off-centre machining of a work piece comprising a wheel, an assembled wheel set, a gear wheel, a turbocharger impeller, a fly wheel, or other rotatable component or assembly to remove a predetermined mass of material from the work piece at a predetermined radial location on the work piece. The apparatus comprises a cutting tool, means for guiding the cutting tool on a cutting path over a predetermined length of a curved path located over the predetermined radial location, means for positioning the cutting tool to adjust a radius of curvature of the cutting path, and means for positioning the cutting tool to cut at a predetermined depth into the surface of the work piece. The means for guiding the cutting tool comprises means for moving the cutting tool along the curved path guided at least in part by a contour of the work piece. More specifically, the means for guiding the cutting tool preferably comprises a carriage for moving along a slideway, the cutting tool mounted on the carriage so that the cutting tool pivots as the carriage moves along the slideway, the angle of pivot of the cutting tool being determined by a contour of the work piece.

The cutting tool may be arranged to pivot as the carriage moves along the slideway so that a spindle of the cutting tool is substantially perpendicular to the work piece surface being machined. The cutting tool may also be mounted on the carriage to permit the cutting tool to move perpendicularly to the direction of motion of the carriage along the slideway so that the cutting tool substantially follows a contour of the workpiece. The means for guiding the cutting tool may include one or more guide members for moving along a surface of the work piece for controlling the pivot angle and perpendicular movement of the cutting tool as the carriage moves along the slideway so that the cutting tool substantially follows a contour of the work piece.

Where the work piece is a wheel with a fillet, the apparatus preferably includes a cutting head assembly for positioning the cutting tool at a predetermined point on the width of the face of the fillet The apparatus may be attached to the wheel during the machining and also may be portable. The apparatus may also include a control system for controlling the guiding means to move the cutting tool over the cutting path.

The following is a description of one embodiment of the invention, by way of example only and with reference to the following drawings, in which:
Fig. 1 is a cross section of a typical rail wheel;
Fig. 2 is a front view of an off-centre machining apparatus attached to a wheel; and
Fig. 3 is a side cross section of the off-centre machining apparatus of Fig. 2.

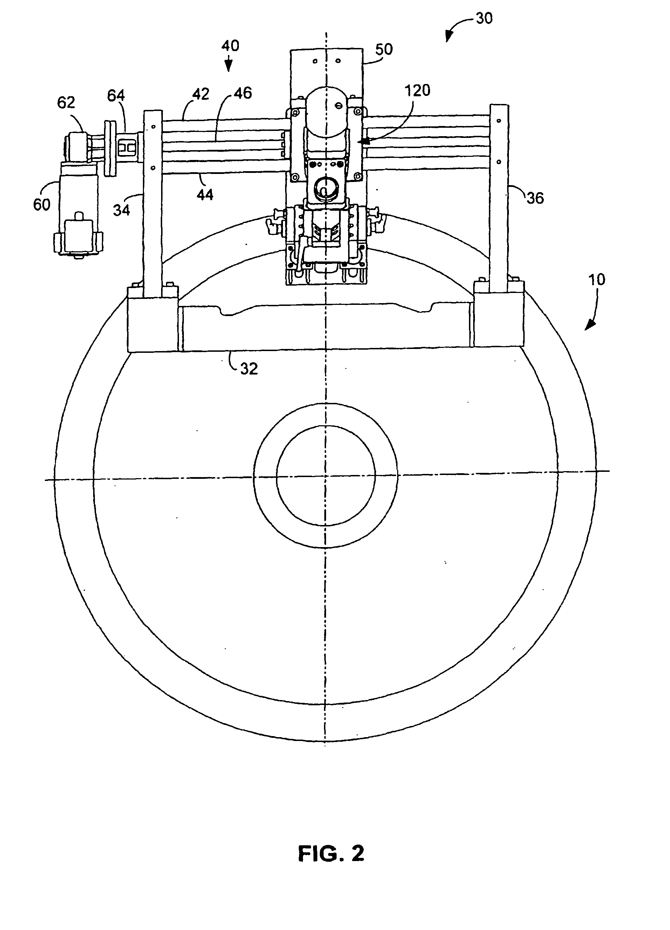

Referring initially to Fig. 2, an embodiment of an off-centre machining apparatus 30 is shown connected to a wheel 10. Only a segment of the wheel 10 is depicted in Fig. 2.

A machining apparatus 30 is shown comprising a support frame 32 with side arms 34 and 36, slideway mechanism 40, and carriage 50. The machining apparatus 30 is shown positioned adjacent to wheel 10. A clamping mechanism (not shown in Fig. 2) is preferably used, optionally comprising screw clamps mounted at each end of support frame 32. Other means could also be used to attach the machining apparatus to the wheel such as spring loaded clamps, magnetic or electromagnetic devices, or any other means suitable for attaching the machining apparatus securely to the wheel. Machining apparatus 30 could alternatively or additionally be secured to another machine, such as a balancing machine, or to the floor or other convenient structure, in which cases there may be no requirement for such a clamping mechanism. Although a wheel is shown in Fig. 2, the apparatus 30 could be used for other types of work pieces.

Support frame 32 is preferably a rigid member for providing structural support for the machining apparatus 60. Slideway mechanism 40 comprises guide rails 42 and 44 on which carriage 50 can move back and forth, and a threaded screw member 46. Carriage 50 is provided with a threaded portion designed to engage the screw member 46 so that the position of carriage 50 along the length of slideway 40 can be controlled by rotating screw member 46. A motor 60, with gear 62 and coupling 64, is preferably fitted to one end of the slideway 40 to rotate screw member 46 and thus control the position of carriage 50. The motor could also be located away from the slideway 40 and a drive belt or drive shaft arrangement used to turn the screw member 46, or screw member 46 could be rotated manually. Limit switehes may also be positioned at points along the slideway on either side of the carriage 50 to control the motor 60 to control the length of movement of the carriage along the slideway, thus controlling the length of the cutting path.

Many other arrangements could also be used to position carriage 50 along slideway 40, for example a single guide rail and a single screw member could be used, or two screw members with no separate guide rails could be used, or a belt or chain fixed to the carriage and looped around pulleys at the ends of slideway 40 could be used in place of the screw member. A motor for positioning the carriage 50 could also be mounted on the carriage itself, using any of the above arrangements so that the motor turned the screw member 46 or the belt or chain. Alternatively the motor could turn a wheel mounted on the carriage which engages the guide rails. Preferably the method employed to move the carriage 50 would permit rapid and precise positioning of the carriage along the length of the slideway 40.

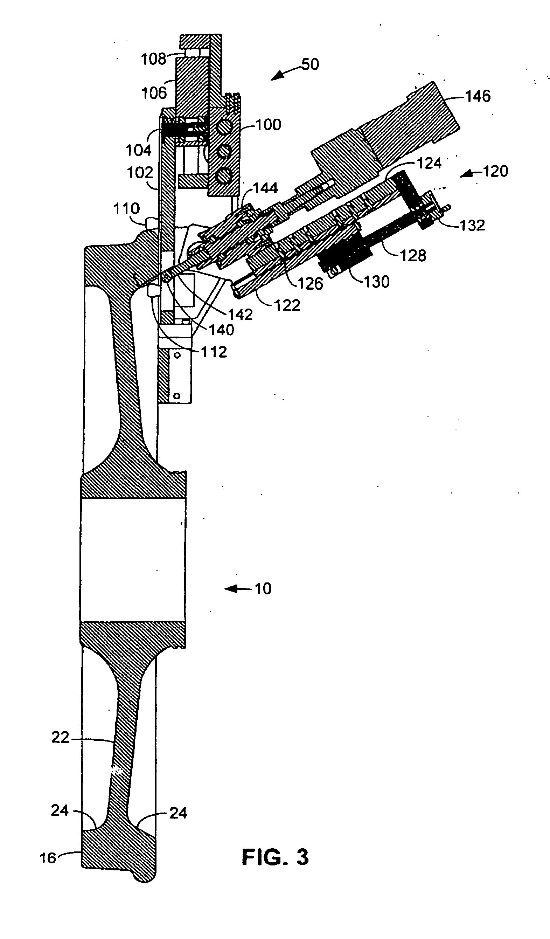

Details of the carriage 50 are shown in Fig. 3 in a cross sectional view. The carriage 50 comprises slide block 100 with channels to receive the guide rails 42 and 44 and screw member 46 to permit carriage 50 to move along slideway 40. Positioning plate 102 is connected to the slide block 100 via swivel pin 104, block 106 and shaft 108. Swivel pin 104 connects positioning plate 102 to block 106, and block 106 receives shaft 108 which is fixed to slide block 100. This arrangement permits positioning plate 102 to move vertically with respect to slide block 100 and also to pivot about the swivel pin 104. Two flange guide rollers 110 and two fillet guide rollers 112 extend outwards from positioning plate 102 to engage the flange and the fillet respectively of the wheel. Thus, as the carriage 50 travels along slideway 40, the positioning plate 102 moves up and down and pivots about swivel pin 104 so that the guide rollers 110 and 112 follow the contour of rim of the wheel. In this way, the positioning plate 102 (and the cutting head assembly 120 with cutting tool 140) follows a curved path around the contour of the wheel as carriage 50 travels moves linearly along slideway 40. The embodiment shown in Fig. 2 shows the apparatus 30 attached to a circular wheel 10 and the path described by positioning plate will be an arc. However, if apparatus 30 were used for machining a work piece having an elliptical, parabolic, partly curved and partly straight, or other regular or irregular shape, then positioning plate 106 (and the cutting tool 140) would describe a path to follow this shape.

Cutting head assembly 100 is mounted on positioning plate 102 in an angled position to permit the apparatus to machine the sloping face of the fillet of the wheel 10. Angled plate 122 is attached to positioning plate 102 as shown in Fig. 3. Positioning plate 102 is generally parallel to the plane formed by the back edge of the rim of the wheel 10 when the apparatus 30 is mounted on the wheel. The angled plate 122 is positioned at an angle to that plane. The angle between angled plate 122 and positioning plate 102 may be adjusted so that the plane of the angled plate 122 is substantially parallel to the surface of the fillet of the wheel 10. The angle between the angled plate 122 and positioning plate 102 may preferably be adjusted from about 45 to 60 degrees, although adjustment from about 0 to 90 degrees may be provided or even greater than 90 degrees. The adjustment of this angle may be made manually or automatically using a stepping motor or other suitable means.

A cutting gear support 124 is mounted on linear bearings 126 to permit relative sliding motion between cutting gear support 124 and angled plate 122. The position of cutting gear support 124 is controlled via screw 128 engaging threaded block 130 mounted on angled plate 122. Hand wheel 132 attaches to screw 128 and may be used to adjust the position of cutting gear support 124. Cutting tool 140 is mounted on spindle 142 received by collar 144. Collar 144 is connected to cutting gear support 124 and supports motor 146 which rotates the cutting tool 140. Although tool 140 is described as a cutting tool, it may comprise a tool for cutting, grinding, or otherwise wearing down or removing material from the surface of the wheel, and the motor 146 may be appropriately adapted to vibrate, oscillate, or otherwise drive the tool as required to perform removal of material. As a consequence, wherever the term "cut" or "cutting" has been used throughout this specification, the words "grind" and "grinding" or "remove" and "removing" should also be understood.

Thus, carriage 50 provides a means to move the cutting tool 140 along a curved path following the contour of the work piece (e.g. in an arc around the perimeter of the wheel 10). The cutting head assembly 100 provides a means to position the cutting tool 140 at varying points across the width of the face of the fillet of the wheel 10 using hand wheel 132, by adjusting the radius of the arc through which the cutting tool moves as carriage 50 moves along slideway 40. The cutting head assembly 100 also provides a means to position the cutting tool 140 at various angles to the face of the fillet by adjusting the angle of angled plate 122, adjusting the depth of the cut into the surface of the fillet made by the cutting tool. The hand wheel 132 could be replaced with a motor or other suitable means to automate the positioning of the cutting tool. Thus, the cutting tool could be automatically or manually positioned at a certain point on the face of the fillet before the cutting operation commences or during the cutting operation, and the cutting angle could be similarly adjusted. Furthermore, the cutting tool motor 146 could be omitted and a cutting tool used which did not require rotation.

Means may also be provided for blending the ends and other edges of the cut into the original surfaces of the wheel. Such means may be incorporated within the movement mechanism such that at the ends of the cutting movement the cutting head assembly 100 is gradually lifted away from the surface of the wheel. Alternative means include adapting the shape and size of the cutting tool 140 so as to provide such a blend without altering the course of movement of the cutting head assembly 100.

An automated control system may be used in conjunction with the apparatus 30. The control system could be used to control motor 60 to control movement of the carriage 50 along the slideway, motor 146 to rotate the cutting tool 140, a motor fitted to adjust the position of the cutting gear support 124 (i.e. to replace hand wheel 132), and/or a motor to adjust the angle of the angled plate 122. The control system preferably includes a programmable digital computer (or optionally an analogue computer) programmed to perform one or more of the following functions with or without human intervention:
(a) calculate the volume of material to be removed from the wheel;
(b) calculate the length of travel of the cutting head along a curved path around the perimeter of the wheel (and the length of travel of the cutting head along the slideway),
(c) calculate the length and form of the path along which the cutting tool will travel;
(d) calculate the width of the cut across the surface of the fillet;
(e) calculate the depth of the cut into the surface of the fillet;
(f) calculate the location and shape of the blend of the cut with the uncut parts of the wheel, at both the ends of the cut and the circumferential edges of the cut;
(f) control the length of travel of the cutting head along the path around the perimeter of the wheel;
(g) control the width of the cut across the surface of the fillet;
(g) control the depth of the cut into the surface of the fillet;
(h) control the movement of the cutting tool at the blends; and/or
(i) control rotation of the cutting tool.

One method of balancing a wheel or wheelset using the apparatus 30 is described below. The wheel or wheelset is mounted on or in a balancing machine, or other balancing equipment is brought to the wheel or wheelset and set up to perform the balancing measurement. Using the balancing machine or equipment, the dynamic imbalance and its location on the wheel are determined using conventional methods well know in the field.

The volume of material to be removed from the wheel is calculated by reference to the density of the material comprising the wheel, to the distance from the centre of the wheel to the centre of gravity of the material to be removed, and to any other relevant factors. Any regulatory or other limitations on the machining of the wheel is also taken into account. For example, British Standard 5892 only permits machining to a depth of 4mm into the web of the wheel. Any such limitations may be made available to the operator of the machining apparatus, for example in a chart located adjacent to the work area, and may be programmed into a control system controlling the operation of the apparatus 30. Using this information, the apparatus 30 is set up to remove an appropriate amount of material in appropriate locations and with appropriate dimensions of cut The calculation would typically include the length and path of travel of the cutting head along a curved path around the perimeter of the wheel (centered about the point of imbalance), the width of the cut across the surface of the fillet and the depth of the cut into the surface of the fillet. A typical cut may include a 400mm arc and 40mm wide across the face of the fillet and 4 mm deep into the surface of the fillet.

The apparatus 30 is positioned adjacent to the wheel with the central point of the slideway 40 located adjacent to the predetermined point of imbalance of the wheel. The apparatus 30 is clamped to the wheel in this location. The motor 60 is started and the cutting tool is driven into the surface of the fillet to cut into the rim. The cutting depth is maintained at less than the maximum allowable by the positioning mechanism.

The carriage 50 is moved along slideway 40 by motor 60. Guide rollers 110 and 112 following the curve of the rim of the wheel so that positioning plate 102 rotates about swivel pin 104. As a consequence, cutting tool 140 moves in a curved path around the rim so that cutting tool 140 and spindle 142 are always perpendicular to the rim. As the carriage 50 moves along the slideway, the cutting tool 140 removes a predetermined amount of material from the face of the fillet over a single pass. If required, the cutting tool 140 is fed into the fillet again as above and the process repeated until the required amount of material has been removed from the rim. The last pass of the tool will be undertaken as a blending in operation to ensure no stress raisers are introduced to the wheel.

If imbalance is detected in the opposite wheel of a wheelset the apparatus 30 will be transferred to that wheel and operation repeated. If necessary the apparatus 30 is then removed and the wheelset rotated to ensure that the dynamic balance has been achieved within the required standards. The surface geometry and finish of the machined section(s) of the wheel(s) may also be inspected and appropriate actions taken to ensure that the machined section(s) are to acceptable standards.

Alternatively, the machining apparatus may be programmed after fitting it to the wheel.
Also, the machining apparatus may be fixed to the balancing machine, the wheelset axle, the floor, or other convenient point, rather than being fitted to the wheel.

Thus, an embodiment of an apparatus and method for off-centre machining has been described. Although the apparatus and method have been described in relation to machining of rail wheels to remove imbalances, they could be used in many other applications. For example, the apparatus can be adapted for other balancing operations such as balancing turbocharger discs, gear wheels, flywheels etc. In addition, while BS5892 specifically refers to monobloc wheels, this method and apparatus applies equally to tyred and other wheel types.

It should be noted that the embodiments described above are susceptible to various modifications and alternative forms. For example, although the apparatus is shown having a straight slideway 40, other means could be used to move the cutting head radially around the perimeter of a wheel. For example, an alternative embodiment may include a carriage mounted on an arm and moving in an arc or some other curved path. In one such arrangement the arm would rotate about a point along the axis of the wheel so that the cutting tool moved along a curved path coincident with the curvature of the wheel rim. In another alternative embodiment, the slideway could be curved, taking the form of an arc or other form appropriate for the machining of the work piece.

The apparatus can be designed to be sufficiently light and rugged to be easily portable from site to site and from location to location within a site, and can be made rugged for use outside a workshop or building. Thus, the apparatus can be brought to a wheelset rather than moving the wheelset to the apparatus and can be operated wherever the wheelset is located.

The machining operation will preferably be performed while the wheelset is on a balancing machine. As the principal datum points for performing the machining are all on the wheel itself, no datum points external to the wheel are required.

The apparatus can be designed to operate on assembled wheelsets to which other equipment is attached, such as gearboxes, axle-mounted and/or cheek-mounted brake discs, or other equipment. The machining apparatus can be adapted to attach to a balancing machine, or to another machine with a balancing capability such as an appropriately adapted lathe, optionally communicating with the balancing or other such machine to electronically receive data relating to the machining required to balance the wheel. This data may include, for example, the quantity of material to be removed from the wheel and the location on the wheel for removal of the material. Thus the determination of the cutting paths, cutting depths, cutting locations, blends, amount of material to be removed and other factors may be performed and programmed into the apparatus automatically, with or without human intervention.

The apparatus enables off-centre machining without requiring the use of a large and expensive lathe and enables the hole drilling and balance weight methods of balancing wheels to be avoided. The apparatus and method provide a combination of portability, quality of finish, precision and cost effectiveness previously unobtainable.

## Claims

1. A method for off-centre machining of a work piece comprising a wheel (10), an assembled wheel set , a gear wheel, a turbocharger impeller, a fly wheel, or other rotatable component or assembly, the method comprising:
determining a mass and a location on the work piece of material for removal from the work piece;
determining a radius, a length, and a depth for a curved cutting path for removal of the material; and
moving a cutting tool (140) along the cutting path to remove the material from the work piece, **characterised in that**
in the step of moving the cutting tool along the cutting path, the cutting tool is guided at least in part by a contour of the work piece.

2. The method of claim 1, wherein the work piece is not rotated during the step of moving the cutting tool along the cutting path.

3. The method of any one of the preceding claims, wherein moving the cutting tool comprises moving the cutting tool back and forth along the cutting path to remove material from the work piece.

4. The method of any one of the preceding claims, wherein the work piece is circular and determining a location on the work piece of material for removal comprises determining a circumferential location on the work piece.

5. The method of any one of the preceding claims, wherein the determination of at least one of the radius, the length, or the depth for the curved cutting path is based in part on the weight of material to be removed from the work piece.

6. The method of any one of the preceding claims, wherein the method comprises balancing the work piece.

7. The method of claim 6, wherein the off-centre machining is performed while the work piece is mounted on a balancing machine.

8. The method of any one of the preceding claims, wherein the step of moving the cutting tool along the cutting path comprises attaching a portable apparatus for guiding the cutting tool on the cutting path to the work piece, and controlling the apparatus to define a cutting path having the predetermined radius, length, and depth.

9. An apparatus for off-centre machining of a work piece comprising a wheel, an assembled wheel set, a gear wheel, a turbocharger impeller, a fly wheel, or other rotatable component or assembly, to remove a predetermined mass of material from the work piece at a predetermined radial location on the work piece, the apparatus comprising:
a cutting tool (140);
means for guiding the cutting tool on a cutting path over a predetermined length of a curved path located over the predetermined radial location;
means for positioning the cutting tool to adjust a radius of curvature of the cutting path; and
means for positioning the cutting tool to cut at a predetermined depth into the surface of the work piece, **characterised in that** the means for guiding the cutting tool comprises means for moving the cutting tool along the curved path guided at least in part by a contour of the work piece.

10. The apparatus of claim 9, wherein the means for guiding comprises a carriage (50) for moving along a slideway (40), the cutting tool (140) mounted on the carriage so that the cutting tool pivots as the carriage moves along the slideway, the angle of pivot of the cutting tool being determined by the contour of the work piece.

11. The apparatus of claim 9, wherein the cutting tool pivots as the carriage moves along the slideway so that a spindle (142) of the cutting tool is substantially perpendicular to the work piece surface being machined.

12. The apparatus of any one of claims 9-10, wherein the cutting tool is mounted on the carriage to permit the cutting tool to move perpendicularly to the direction of motion of the carriage along the slideway so that the cutting tool substantially follows the contour of the workpiece.

13. The apparatus of claim 11, wherein the means for guiding the cutting tool further comprises one or more guide members for moving along a surface of the work piece for controlling the pivot angle and perpendicular movement of the cutting tool as the carriage moves along the slideway so that the cutting tool substantially follows the contour of the work piece.

14. The apparatus of any one of claims 9-12, wherein the means for guiding the cutting tool comprises a radial arm which rotates about a point on the work piece in order to position the cutting tool.

15. The apparatus of claim 9-13, wherein the means for positioning the cutting tool to adjust a radius of curvature of the cutting path comprises means for adjusting the position of the cutting tool with respect to the pivot point about which the cutting tool pivots.

16. The apparatus of any one of claims 9-14, wherein the work piece comprises a wheel having a fillet and wherein the means for positioning the cutting tool to adjust a radius of curvature of the cutting path comprises a cutting head assembly (120) for positioning the cutting tool at a predetermined point on the width of the face of the fillet.

17. The apparatus of any one of claims 9-15, wherein the means for positioning the cutting tool to cut at a predetermined depth into the surface of the work piece is adapted to adjust the angle of the cutting tool with respect to the plane of motion of the cutting tool.

18. The apparatus of any one of claims 9-16, further comprising means to attach the apparatus to the work piece during the off-centre machining.

19. The apparatus of claim 18, wherein the apparatus is not rigidly attached to any other machine or apparatus during the off-centre machining.

20. The apparatus of any one of claims 9-19, wherein the apparatus is portable.

21. The apparatus of any one of claims 10-19, further comprising an automated control system for controlling the guiding means to move the cutting tool over the cutting path.

22. The apparatus of claim 21, wherein the control system is adapted to control the guiding means to remove the predetermined mass of material from the work piece.

23. The apparatus of any one of claims 21-22, wherein the control system is adapted to calculate a length of the cutting path, a location of the cutting path, a depth for the cut, or a number of cuts to perform.

24. The apparatus of any one of claims 21-22, wherein the control system is adapted to calculate a depth for the cut, a location of a blend, a shape of a blend, or a cutting path of a blend.

25. The apparatus of any one of claims 21-24, wherein the control system is adapted to receive at least one parameter from another system or machine for controlling the means for guiding the cutting tool.

## Patentansprüche

1. Verfahren zur exzentrischen Bearbeitung eines Werkstücks, das ein Rad (10), einen montierten Rädersatz, ein Getrieberad, ein Turbolader-Antriebsrad, ein Schwungrad oder andere drehbare Komponenten oder Bauteile umfasst, wobei das Verfahren Folgendes umfasst:
die Bestimmung einer Masse und einer Position eines Materials auf dem Werkstück, das von dem Werkstück zu entfernen ist;
die Bestimmung eines Radius, einer Länge und einer Tiefe für einen bogenförmigen Schneidepfad für die Entfernung des Materials; und
die Bewegung eines Schneidewerkzeugs (140) entlang des Schneidepfads, um das Material von dem Werkstück zu entfernen, **dadurch gekennzeichnet, dass**
bei dem Schritt der Bewegung des Schneidewerkzeuges entlang des Schneidepfads das Schneidewerkzeug mindestens teilweise von einer Kontur des Werkstücks geführt wird.

2. Verfahren nach Anspruch 1, bei dem das Werkstück bei dem Schritt der Bewegung des Schneidewerkzeuges entlang des Schneidepfads nicht gedreht wird.

3. Verfahren nach einem der vorherigen Ansprüche, bei dem die Bewegung des Schneidewerkzeugs die Bewegung des Schneidewerkzeugs entlang des Schneidepfads vor und zurück zur Entfernung des Materials von dem Werkstück umfasst.

4. Verfahren nach einem der vorherigen Ansprüche, bei dem das Werkstück kreisförmig ist und die Bestimmung einer Position von dem zu entfernendem Material auf dem Werkstück die Bestimmung einer umlaufende Position auf dem Werkstück umfasst.

5. Verfahren nach einem der vorherigen Ansprüche, bei dem die Bestimmung von mindestens einem des Radius, der Länge oder der Tiefe für den gebogenen Schneidepfad teilweise auf dem Gewicht des von dem Werkstück zu entfernenden Materials beruht.

6. Verfahren nach einem der vorherigen Ansprüche, bei dem das Verfahren das Auswuchten des Werkstücks umfasst.

7. Verfahren nach Anspruch 6, bei dem die exzentrische Bearbeitung durchgeführt wird, während das Werkstück auf einer Auswuchtmaschine montiert ist.

8. Verfahren nach einem der vorherigen Ansprüche, bei dem der Schritt der Bewegung des Schneidewerkzeugs entlang des Schneidepfads die Befestigung eines tragbaren Geräts zur Führung des Schneidewerkzeugs auf dem Schneidepfad zum Werkzeug und die Kontrolle des Geräts zur Definition eines Schneidepfads umfasst, der den vorher bestimmten Radius und die vorher bestimmte Länge sowie Tiefe besitzt.

9. Gerät zur exzentrischen Bearbeitung eines Werkstücks, das ein Rad, einen montierten Rädersatz, ein Getrieberad, ein Turbolader-Antriebsrad, ein Schwungrad oder andere drehbare Komponenten oder Bauteile umfasst, um eine vorher bestimmte Masse von Material von dem Werkstück an einer vorher bestimmten radialen Position auf dem Werkstück zu entfernen, wobei das Gerät Folgendes umfasst:
ein Schneidewerkzeug (140);
Mittel zur Führung des Schneidewerkzeugs auf einem Schneidepfad über eine vorher bestimmten Länge eines bogenförmigen Pfades, der sich über der vorher bestimmten radialen Position befindet;
Mittel zur Positionierung des Schneidewerkzeugs, um den Krümmungsradius des Schneidepfads anzupassen; und
Mittel zur Positionierung des Schneidewerkzeugs, um mit einer vorher bestimmten Tiefe in die Oberfläche des Werkzeugs zu schneiden, **dadurch gekennzeichnet, dass** das Mittel zur Führung des Schneidewerkzeugs ein Mittel zur Bewegung des Schneidewerkzeugs entlang des bogenförmigen Pfads umfasst, das mindestens teilweise von einer Kontur des Werkstücks geführt wird.

10. Gerät nach Anspruch 9, bei dem das Führungsmittel einen Wagen (50) zur Bewegung entlang einer Gleitbahn (40) umfasst, wobei das Schneidewerkzeug (140) auf dem Wagen montiert ist, so dass sich das Schneidewerkzeug dreht, während sich der Wagen entlang der Gleitbahn bewegt, wobei der Drehwinkel des Schneidewerkzeugs durch die Kontur des Werkstücks bestimmt ist.

11. Gerät nach Anspruch 9, bei dem sich das Schneidewerkzeug dreht, während sich der Wagen entlang der Gleitbahn bewegt, so dass eine Drehspindel (142) des Schneidewerkzeugs im Wesentlichen perpendikulär zur bearbeiteten Werkstückoberfläche ist.

12. Gerät nach einem der Ansprüche 9-10, bei dem das Schneidewerkzeug auf dem Wagen montiert ist, um es dem Schneidewerkzeug zu erlauben, sich perpendikulär zur Bewegungsrichtung des Wagens auf der Gleitbahn zu bewegen, so dass das Schneidewerkzeug im Wesentlichen der Kontur des Werkstücks folgt.

13. Gerät nach Anspruch 11, bei dem das Mittel zur Führung des Schneidewerkzeugs ferner ein oder mehrere Führungselemente zur Bewegung entlang einer Oberfläche des Werkstücks umfasst, um den Drehachsenwinkel und die perpendikuläre Bewegung des Schneidewerkzeugs zu steuern, während sich der Wagen entlang der Gleitbahn bewegt, so dass das Schneidewerkzeug im Wesentlichen der Kontur des Werkstücks folgt.

14. Gerät nach einem der Ansprüche 9-12, bei dem das Mittel zur Führung des Schneidewerkzeugs einen radialen Arm umfasst, der sich um einen Punkt des Werkstücks dreht, um das Schneidewerkzeug zu positionieren.

15. Das Gerät nach Anspruch 9-13, bei dem das Mittel zur Positionierung des Schneidewerkzeugs zur Anpassung eines Krümmungsradius des Schneidepfads ein Mittel zur Anpassung der Position des Schneidewerkzeugs gegenüber dem Drehachsenpunkt umfasst, um den sich das Schneidewerkzeug dreht.

16. Gerät nach einem der Ansprüche 9-14, bei dem das Werkstück ein Rad umfasst, das eine Ausrundung besitzt, und bei dem das Mittel zur Positionierung des Schneidewerkzeugs zur Anpassung eines Krümmungsradius des Schneidepfads eine Schneidekopfbaugruppe (120) zur Positionierung des Schneidewerkzeugs an einem vorher bestimmten Punkt auf der Breite der Fläche der Ausrundung umfasst.

17. Gerät nach einem der Ansprüche 9-15, bei dem das Mittel zur Positionierung des Schneidewerkzeugs zum Schneiden mit einer vorher bestimmten Tiefe in die Oberfläche des Werkzeugs dazu ausgelegt ist, den Winkel des Schneidewerkzeugs gegenüber der Bewegungsebene des Schneidewerkzeugs anzupassen.

18. Gerät nach einem der Ansprüche 9-16, das ferner ein Mittel zur Befestigung des Geräts an dem Werkstück während der exzentrischen Bearbeitung umfasst.

19. Gerät nach Anspruch 18, bei dem das Gerät während der exzentrischen Bearbeitung nicht starr an einer anderen Maschine oder anderem Gerät befestigt ist.

20. Gerät nach einem der Ansprüche 9-19, bei dem das Gerät tragbar ist.

21. Gerät nach einem der Ansprüche 10-19, das ferner ein automatisiertes Steuersystem zur Steuerung des Führungsmittels umfasst, um das Schneidewerkzeug über den Schneidepfad zu bewegen.

22. Gerät nach Anspruch 21, bei dem das Steuersystem dazu ausgelegt ist, das Führungsmittel zu steuern, um die vorher bestimmte Masse an Material von dem Werkstück zu entfernen.

23. Gerät nach einem der Ansprüche 21-22, bei dem das Steuersystem dazu ausgelegt ist, eine Länge des Schneidepfads, eine Position des Schneidepfads, eine Tiefe des Schnitts oder eine Anzahl von auszuführenden Schnitten zu berechnen.

24. Gerät nach einem der Ansprüche 21-22, bei dem das Steuersystem dazu ausgelegt ist, eine Tiefe für den Schnitt, eine Position einer Mischung, die Form einer Mischung oder einen Schneidepfad einer Mischung zu berechnen.

25. Gerät nach einem der Ansprüche 21-24, bei dem das Steuersystem dazu ausgelegt ist, mindestens einen Parameter von einem anderen System oder einer anderen Maschine zur Steuerung des Mittels zur Führung des Schneidewerkzeugs zu empfangen.

## Revendications

1. Procédé permettant de réaliser un usinage excentré d'une pièce de fabrication comprenant une roue (10), un ensemble de roues assemblées, une roue d'engrenage, un impulseur de turbocompresseur, un volant ou tout autre ensemble ou composant rotatif, le procédé comprenant les étapes consistant à :
déterminer une masse et un emplacement sur la pièce de fabrication de matériau pouvant être retiré de la pièce de fabrication ;
déterminer un rayon, une longueur et une profondeur d'un chemin de découpe incurvé permettant de retirer le matériau ; et
déplacer l'outil de découpage (140) le long du chemin de découpe afin de retirer le matériau de la plaque de fabrication, **caractérisé en ce que** :
dans l'étape de déplacement de l'outil de découpage le long du chemin de découpe, l'outil de découpage est guidé au moins en partie par un contour de la pièce de fabrication.

2. Procédé selon la revendication 1, dans lequel la pièce de fabrication n'est pas mise en rotation pendant l'étape de déplacement de l'outil de découpage le long du chemin de découpe.

3. Procédé selon l'une quelconque des revendications précédentes, dans lequel le déplacement de l'outil de découpage comprend le déplacement de l'outil de découpage selon un mouvement de va-et-vient le long du chemin de découpe pour retirer le matériau de la pièce de fabrication.

4. Procédé selon l'une quelconque des revendications précédentes, dans lequel la pièce de fabrication est circulaire et dans lequel la détermination d'un emplacement sur la pièce de fabrication du matériau à retirer comprend la détermination d'un emplacement circonférentiel sur la pièce de fabrication.

5. Procédé selon l'une quelconque des revendications précédentes, dans lequel la détermination d'au moins l'un des rayon, longueur ou profondeur du chemin de découpe incurvé est fondée en partie sur le poids du matériau devant être retiré de la pièce de fabrication.

6. Procédé selon l'une quelconque des revendications précédentes, dans lequel le procédé comprend l'équilibrage de la pièce de fabrication.

7. Procédé selon la revendication 6, dans lequel l'usinage excentré est exécuté tandis que la pièce de fabrication est montée sur une machine d'équilibrage.

8. Procédé selon l'une quelconque des revendications précédentes, dans lequel l'étape de déplacement de l'outil de découpage le long du chemin de découpe comprend la fixation d'un appareil portable permettant de guider l'outil de découpage sur le chemin de découpe jusqu'à la pièce de fabrication, et la commande de l'appareil pour définir un chemin de découpe ayant un rayon, une longueur et une profondeur prédéterminés.

9. Appareil permettant un usinage excentré d'une pièce de fabrication comprenant une roue, un ensemble de roues assemblées, une roue d'engrenage, un impulseur de turbocompresseur, un volant et tout autre ensemble ou composant rotatif, permettant de retirer une masse prédéterminée de matériau de la pièce de fabrication en un emplacement radial prédéterminé sur la pièce de fabrication, l'appareil comprenant :
un outil de découpage (140) ;
des moyens permettant de guider l'outil de découpage sur un chemin de découpe sur une longueur prédéterminée d'un chemin incurvé situé au-dessus de l'emplacement radial prédéterminé ;
des moyens permettant de positionner l'outil de découpage pour ajuster un rayon de courbure du chemin de découpe ; et
des moyens permettant de positionner l'outil de découpage afin de découper sur une profondeur prédéterminée la surface de la pièce de fabrication, **caractérisé en ce que** les moyens permettant de guider l'outil de découpage comprennent des moyens permettant de déplacer l'outil de découpage le long du chemin incurvé guidé au moins en partie par un contour de la pièce de fabrication.

10. Appareil selon la revendication 9, dans lequel les moyens de guidage comprennent un chariot (50) pouvant être déplacé le long d'une glissière (40), l'outil de découpage (140) étant monté sur le chariot de telle sorte que l'outil de découpage pivote lorsque le chariot se déplace le long de la glissière, l'angle de pivotement de l'outil de découpage étant déterminé par le contour de la pièce de fabrication.

11. Appareil selon la revendication 9, dans lequel l'outil de découpage pivote au fur et à mesure que le chariot se déplace le long de la glissière de telle sorte qu'un axe (142) de l'outil de découpage est sensiblement perpendiculaire à la surface de la pièce de fabrication usinée.

12. Appareil selon l'une quelconque des revendications 9 à 10, dans lequel l'outil de découpage est monté sur le chariot pour permettre à l'outil de découpage de se déplacer perpendiculairement au sens de déplacement du chariot le long de la glissière de telle sorte que l'outil de découpage suit sensiblement le contour de la pièce de fabrication.

13. Appareil selon la revendication 11, dans lequel les moyens permettant de guider l'outil de découpage comprennent en outre un ou plusieurs éléments de guidage pouvant être déplacés le long d'une surface de la pièce de fabrication pour commander l'angle de pivotement et le mouvement perpendiculaire de l'outil de découpage au fur et à mesure que le chariot se déplace le long de la glissière de telle sorte que l'outil de découpage suit sensiblement le contour de la pièce de fabrication.

14. Appareil selon l'une quelconque des revendications 9 à 12, dans lequel les moyens permettant de guider l'outil de découpage comprennent un bras radial qui tourne autour d'un point de la pièce de fabrication afin de positionner l'outil de découpage.

15. Appareil selon les revendications 9 à 13, dans lequel les moyens permettant de positionner l'outil de découpage pour ajuster un rayon de courbure du chemin de découpe comprennent des moyens permettant d'ajuster la position de l'outil de découpage par rapport au point de pivotement autour duquel pivote l'outil de découpage.

16. Appareil selon l'une quelconque des revendications 9 à 14, dans lequel la pièce de fabrication comprend une roue ayant un filet et dans lequel les moyens permettant de positionner l'outil de découpage pour ajuster un rayon de courbure du chemin de découpe comprennent un ensemble de tête de découpage (120) permettant de positionner l'outil de découpage en un point prédéterminé sur la largeur de la face du filet.

17. Appareil selon l'une quelconque des revendications 9 à 15, dans lequel les moyens permettant de positionner l'outil de découpage pour découper sur une profondeur prédéterminée la surface de la pièce de fabrication sont conçus pour ajuster l'angle de l'outil de découpage par rapport au plan de déplacement de l'outil de découpage.

18. Appareil selon l'une quelconque des revendications 9 à 16, comprenant en outre des moyens permettant de fixer l'appareil à la pièce de fabrication au cours de l'usinage excentré.

19. Appareil selon la revendication 18, dans lequel l'appareil n'est fixé rigidement à aucun autre appareil ou machine au cours de l'usinage excentré.

20. Appareil selon l'une quelconque des revendications 9 à 19, dans lequel l'appareil est portable.

21. Appareil selon l'une quelconque des revendications 10 à 19, comprenant en outre un système de commande automatisé permettant de commander les moyens de guidage afin de déplacer l'outil de découpage sur le chemin de découpe.

22. Appareil selon la revendication 21, dans lequel le système de commande est conçu pour commander les moyens de guidage afin de retirer la masse prédéterminée de matériau de la pièce de fabrication.

23. Appareil selon l'une quelconque des revendications 21 à 22, dans lequel le système de commande est conçu pour calculer une longueur du chemin de découpe, un emplacement du chemin de découpe, une profondeur de découpe ou un certain nombre de découpes à exécuter.

24. Appareil selon l'une quelconque des revendications 21 à 22, dans lequel le système de commande est conçu pour calculer une profondeur de découpe, un emplacement d'un raccord, une forme d'un raccord, ou un chemin de découpe d'un raccord.

25. Appareil selon l'une quelconque des revendications 21 à 24, dans lequel le système de commande est conçu pour recevoir au moins un paramètre d'une autre machine ou d'un autre système permettant de commander les moyens de guidage de l'outil de découpage.
